# EUROPÄISCHE PATENTSCHRIFT

(11) **EP 4 263 314 B1**
(45) Veröffentlichungstag und Bekanntmachung des Hinweises auf die Patenterteilung: **09.10.2024**
(21) Anmeldenummer: 21840475.4
(22) Anmeldetag: 15.12.2021
(51) Int. Cl.: B61B 12/00, B61B 12/06, H04B 3/00

(54) **SEILBAHN MIT DATENKOMMUNIKATION ZWISCHEN SEILBAHNSTEUERUNG UND FAHRZEUG**
CABLEWAY WITH DATA COMMUNICATION BETWEEN CABLEWAY CONTROLLER AND VEHICLE
TÉLÉPHÉRIQUE AVEC COMMUNICATION DE DONNÉES ENTRE UN DISPOSITIF DE COMMANDE DE TÉLÉPHÉRIQUE ET UN VÉHICULE

(30) Priorität: 17.12.2020 AT 511102020
(43) Veröffentlichungstag der Anmeldung: 25.10.2023
(73) Patentinhaber: Innova Patent GmbH, 6922 Wolfurt (AT)
(72) Erfinder: PFEIFER, Daniel, 6580 Sankt Anton am Arlberg (AT); MOHR, Clemens, 6922 Wolfurt (AT)
(74) Vertreter: Patentanwälte Pinter & Weiss OG
(86) Internationale Anmeldenummer: PCT/EP2021/085913
(87) Internationale Veröffentlichungsnummer: WO 2022/129182

(56) Entgegenhaltungen:
- EP-A1- 2 067 682
- EP-A1- 3 476 686
- WO-A1-2015/196221
- WO-A1-2018/228965
- WO-A1-2018/228971
- JP-A- 2020 083 234
- JP-A- H02 231 263
- US-A1- 2010 085 183

## Beschreibung

Die Erfindung betrifft ein Verfahren zur Datenkommunikation zwischen einer Seilbahnsteuerung und zumindest einem Fahrzeug einer Seilbahn, wobei im Betrieb der Seilbahn ein Stromabnehmer des Fahrzeugs durch die Bewegung des Fahrzeugs eine Stromschiene kontaktiert. Die Erfindung betrifft ebenso eine Seilbahn mit einer solchen Datenkommunikation.

Seilbahnen werden zum Transport von Personen oder Gütern verwendet. Dazu wird eine Anzahl von seilgezogenen Fahrzeugen der Seilbahn zwischen zumindest zwei Stationen bewegt. Typische Seilbahnen sind Luftseilbahnen mit an einem Trag- oder Förderseil in der Luft hängenden Fahrzeugen, wie Gondeln, Kabinen oder Sessel, oder Standseilbahnen mit auf Schienen oder anderen Fahrwegen fahrenden, seilgezogenen Fahrzeugen. An Fahrzeugen einer Seilbahn können verschiedene Sensoren vorgesehen sein, die während der Fahrt des Fahrzeugs Daten erfassen. Die Daten können am Fahrzeug gespeichert werden und an bestimmten Stellen der Seilbahn an die Seilbahnsteuerung übertragen werden. Es kann aber auch vorgesehen sein, die Daten ohne Speicherung an die Seilbahnstation zu übertragen. Beispiele für einen solchen Sensor sind ein Windsensor, der die Windgeschwindigkeit am Fahrzeug misst, oder ein Neigungssensor, der eine Neigung gegenüber der Senkrechten misst, oder ein Beschleunigungssensor oder ein Gyroskop, die ein Pendeln eines Fahrzeugs messen. Ein anderes Beispiel ist die Verriegelungsüberwachung einer Tür oder eines Sicherheitsbügels eines Fahrzeugs. Der Status der Verriegelung wird in der Station erfasst und an die Seilbahnsteuerung gesendet. Nur bei ordnungsgemäßer aktivierter Verriegelung darf das Fahrzeug aus der Seilbahnstation ausfahren. Andere Daten, die an einem Fahrzeug erfasst werden können sind beispielsweise eine Innenraumtemperatur, Statusdaten einer elektrischen Energieversorgung eines Fahrzeugs (Beispielsweise ein Ladezustand (SOC) oder ein Gesundheitszustand (SOH) einer Batterie), eine Sitzbelegung usw. für die geeignete Sensoren am Fahrzeug vorgesehen sind, die Daten erzeugen. Solche Daten können in der Seilbahnsteuerung zur Überwachung der Funktion und Steuerung der Seilbahn verwendet werden, beispielsweise der Steuerung der Seilgeschwindigkeit, einer Funktionsüberwachung zum Erkennen von Fehlzuständen, einer Wartungsplanung usw. Für bestimmte Funktionalitäten ist es erwünscht, ein Fahrzeug eindeutig identifizieren zu können. Daher können Fahrzeuge einer Seilbahn auch mit einer eindeutigen Fahrzeugidentifikation versehen werden, die an bestimmten Stellen ausgelesen wird und an die Seilbahnsteuerung übertragen wird, bedarfsweise gemeinsam mit anderen Daten, sodass die Daten einem bestimmten Fahrzeug zugeordnet werden können. Die Fahrzeugidentifikation ist beispielsweise in einem Speicher des Fahrzeugs gespeichert und kann an bestimmten Stellen der Seilbahn ausgelesen werden. Ein Beispiel ist die Überwachung der Klemmkraft einer Seilklemme eines Fahrzeugs. Die Klemmkraft jedes Fahrzeugs kann bei jeder Durchfahrt durch eine Station geprüft werden, beispielsweise mittels eines Klemmkraftsensors an der Station. Der mit dem Klemmkraftsensor ermittelte Sensorwert kann zusammen mit der Fahrzeugidentifikation an die Seilbahnsteuerung gesendet werden. In der Seilbahnsteuerung kann dann der zeitliche Verlauf der Klemmkraft aufgezeichnet werden und rechtzeitig ein Tausch oder eine Wartung veranlasst werden, wenn sich die Klemmkraft einer kritischen Marke nähert. Auf ähnliche Weise können auch andere Funktionen des Fahrzeugs oder der Seilbahn geprüft und überwacht werden.

Die Übertragung von Daten (Sensordaten, Fahrzeugidentifikation usw.) aus dem Fahrzeug an die Seilbahnstation ist in der Praxis allerdings schwierig. Zum einen bedarf es dafür einer zuverlässigen Energieversorgung am Fahrzeug. Zum anderen besteht die Schwierigkeit darin, dass es im normalen Betrieb der Seilbahn keine oder keine zuverlässige Verbindung zwischen dem Fahrzeug und der Seilbahnsteuerung gibt. In der WO 2018/228971 A1 und der WO 2018/228965 A1 wird beispielsweise eine Datenübertragung auf Basis von RFID (Radio Frequency Identification) Transponder vorgeschlagen. Dazu ist am Fahrzeug ein RFID Tag angeordnet. Sobald der RFID Tag in den Sendebereich eines RFID Senders/Empfängers kommt, der beispielsweise in der Seilbahnstation angeordnet ist, sendet der RFID Tag seine Daten an den RFID Empfänger. Der RFID Transponder kann die benötigte elektrische Energie dabei auch aus dem Sendesignal des RFID Senders gewinnen. Die Datenkommunikation mittels RFID erfordert aber zusätzliche Hardware am Fahrzeug und der Seilbahn, wie beispielsweise Antennen, RFID Tags, RFID Sender / Empfänger, Verkabelung zur Seilbahnsteuerung usw. Abgesehen davon ist die RFID Übertragung empfindlich gegen die rauen Umgebungsbedingungen (Temperaturen, Nässe, Eis, Schnee usw.) im Umfeld einer Seilbahn, was sich negativ auf die Verfügbarkeit des Übertragungskanals auswirken kann. Insbesondere bei sicherheitskritischen Anwendungen, wie einer Türverriegelungsüberwachung, kann das ein Problem darstellen Es ist eine Aufgabe der gegenständlichen Erfindung eine alternative, einfach umzusetzende Datenübertragung zwischen einem Fahrzeug einer Seilbahn und einer Seilbahnsteuerung anzugeben.

Diese Aufgabe wird mit den Merkmalen der unabhängigen Ansprüche gelöst. Die Erfindung nutzt eine Powerline Kommunikation zur Datenkommunikation zwischen einem Fahrzeug und der Seilbahnsteuerung. Damit können bestehende Einrichtungen, insbesondere elektrische Leitungen und Verbindung, der Seilbahn für die Powerline Kommunikation genutzt werden. Es sind lediglich Powerlinemodems und bedarfsweise ein kleiner elektrischer Pufferspeicher vorzusehen, was aber nur wenig Aufwand und Kosten verursacht. Über die Powerline Datenkommunikation können beliebige Fahrzeugdaten (Steuerdaten, Sensordaten) übertragen werden, womit die Powerline Datenkommunikation auch sehr flexibel und vielfältigst, und insbesondere auch an verschiedenen Stellen der Seilbahn, eingesetzt werden kann. Es kann damit auch vorgesehen sein, an verschiedenen Stellen der Seilbahn verschiedene Fahrzeugdaten zwischen einem Fahrzeug und der Seilbahnsteuerung auszutauschen.

Vorteilhafterweise können mit der erfindungsgemäßen Datenkommunikation als Fahrzeugdaten Steuerdaten an einen (vorzugsweise elektrischen) Verbraucher des Fahrzeugs gesendet werden, mit denen eine Funktion des Fahrzeug gesteuert wird. Gleichfalls vorteilhaft kann die Seilbahnsteuerung Fahrzeugdaten in Form von Sensordaten vom Fahrzeug erhalten, mit denen die Seilbahn gesteuert oder überwacht werden kann. Die Powerline Datenkommunikation ermöglicht somit sowohl die unidirektionale Datenkommunikation zwischen Fahrzeug und Seilbahnsteuerung, oder umgekehrt, oder auch eine bidirektionale Datenkommunikation.

Da die Powerline Datenkommunikation nicht permanent aufrecht erhalten werden kann, sondern nur im Bereich einer Stromschiene, ist es vorteilhaft, wenn Sensordaten während einer Zeitspanne ohne Kontakt zwischen Stromabnehmer und Stromschiene in einer Speichereinheit des Fahrzeugs gespeichert werden und während einer Zeitspanne mit Kontakt zwischen Stromabnehmer und Stromschiene von der Speichereinheit mit dem Fahrzeug-Powerlinemodem an die Seilbahnsteuerung übertragen werden. Auf diese Weise kann sichergestellt werden, dass keine Sensordaten verloren gehen.

Zusätzlich kann die Stromschiene auch zur elektrischen Versorgung des Fahrzeugs genutzt werden. Nachdem solche elektrischen Versorgungen über Stromschienen bei Seilbahnen durchaus üblich sind, bedeutet das umgekehrt, dass eine solche bestehende elektrische Versorgung auf einfache Weise um die Powerline Datenkommunikation erweitert werden können.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Station einer Seilbahn mit einem Fahrzeug mit einem Fahrzeugsensor,
Fig.2 eine erfindungsgemäße Powerline Kommunikation zwischen Fahrzeug und Seilbahnstation,
Fig.3 eine Ausführung eines Powerlinemodems zur Powerline Kommunikation und
Fig.4 eine vorteilhafte Ausgestaltung zur Übertragung von Fahrzeugdaten durch Powerline Kommunikation.

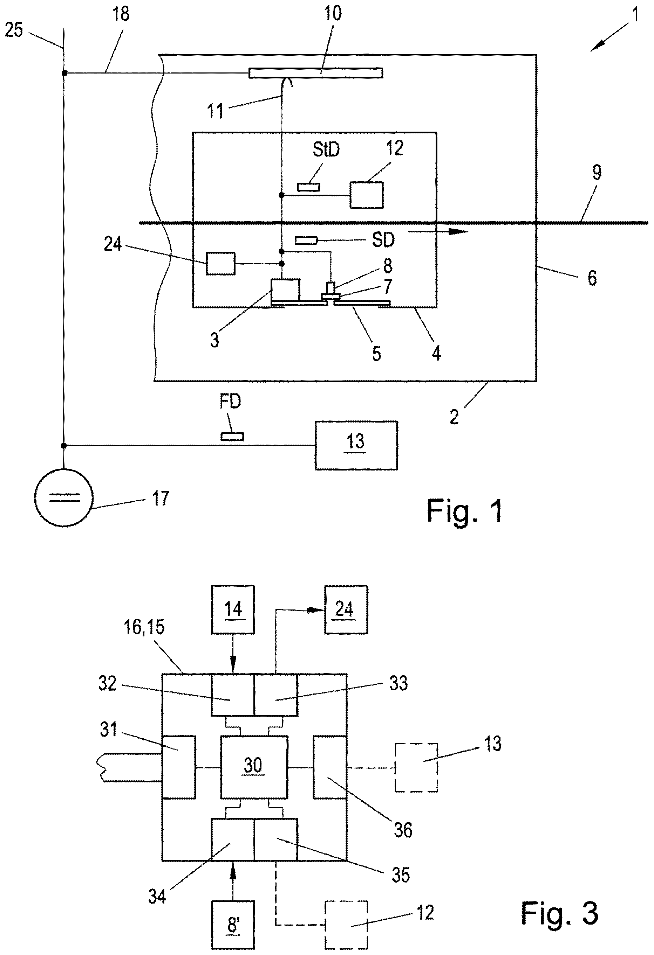

In Fig.1 ist eine erste Station 2 einer Seilbahn 1 angedeutet. Hinlänglich bekannte Einrichtungen der Seilbahn 1 in der Station 2, wie beispielsweise eine Umlenkscheibe für ein Seil 9, ein Seilantrieb oder Spannvorrichtungen für die Umlenkscheibe, ein Förderantrieb zum Bewegen von vom Seil abgekoppelten Fahrzeugen usw., am Fahrzeug 4, wie beispielsweise ein Gehänge, Kuppelklemmen usw., und auf der Strecke, wie beispielsweise Stützen mit Tragrollen für das Seil 9 usw., oder eine zweite Station sind nicht dargestellt, da für die Erfindung nicht relevant. Mit dem Seil 9 wird zumindest ein Fahrzeug 4 zwischen der ersten Station 2 und einer nicht dargestellten zweiten Station befördert. Dazu kann das Fahrzeug 4 mit dem Seil 9 ebenfalls in hinlänglich bekannter Weise fix verbunden sein oder vom Seil mittels federbetätigter Kuppelklemmen abkoppelbar sein. Die Verbindung des Fahrzeugs 4 mit dem Seil 9, beispielsweise in Form eines Gehänges, ist ebenso bekannt und daher nicht dargestellt. Ebenso können in bekannter Weise auch mehrere Seile 9 vorgesehen sein, beispielsweise ein fix gespanntes Tragseil, auf dem ein Laufwerk des Fahrzeugs 4 läuft, und ein bewegtes Förderseil, mit dem am Tragseil aufgehängte Fahrzeug bewegt wird. Die Erfindung wird nachfolgend ohne Einschränkung der Allgemeinheit am Beispiel einer Kabine als Fahrzeug 4 beschreiben. Das Fahrzeug hat im gezeigten Ausführungsbeispiel eine Schiebetür als Verschlusseinrichtung 5.

Am Fahrzeug 4 kann ein Fahrzeugsensor 8 vorgesehen sein, der einen bestimmten Zustand des Fahrzeugs 4 erfasst und Sensordaten SD erzeugt. Der Fahrzeugsensor 8 kann, wie in Fig. 1, beispielsweise den Zustand einer Verriegelungseinheit 7 der Verschlusseinrichtung 5 erfassen. Daneben gibt es natürlich noch eine Fülle von anderen möglichen Fahrzeugsensoren 8, beispielsweise ein Sensor zur Erfassung einer Sitzbelegung des Fahrzeugs 4 mit Personen, oder ein Temperatursensor zur Erfassung der Innenraumtemperatur einer Kabine oder einer Außentemperatur, oder ein Spannungssensor oder Stromsensor zur Erfassung einer Versorgungspannung einer elektrischen Energieversorgung des Fahrzeugs, oder ein Beschleunigungs- oder Neigungssensor usw. Am Fahrzeug 4 kann auch eine Speichereinheit 24 zum Speichern von Sensordaten SD vorgesehen sein. Die Speichereinheit 24 ist vorzugsweise ein nichtflüchtiger Speicher, beispielsweise ein Halbleiterspeicher, wie ein SSD (Solid State Drive), EPROM oder Flash-Speicher, eine Festplatte usw., kann aber auch ein flüchtiger Speicher sein, wie beispielsweise ein RAM (Random Access Memory) Speicher usw. Sensordaten SD können auch Daten sei, die aus anderen Sensordaten SD abgeleitet, und gegebenenfalls in der Speichereinheit 24 gespeichert, werden, beispielsweise könnte aus einer Versorgungspannung einer Batterie ein Ladezustand einer Batterie ermittelt werden. In der Speichereinheit 24 kann auch eine Fahrzeugidentifikation FID gespeichert sein, die ebenfalls als Sensordaten SD ausgelesen werden kann.

Es ist aber auch möglich, Steuerdaten StD von der Station 2 auf das Fahrzeug 4 zu übertragen, um einen Verbraucher 12 zu steuern. Solche Steuerdaten StD sind üblicherweise Steuerbefehle oder Kommunikationsdaten. Beispielsweise können Steuerbefehle für die Steuerung einer Klimaanlage, einer Lüftung, einer Sitzheizung, einer Scheibenheizung, eines Lichtes usw. genutzt werden. Die Verbraucher 12 weisen natürlich entsprechende Schnittstellen auf, um die Steuerbefehle empfangen und umsetzen zu können. Kommunikationsdaten können beispielsweise ein Einsprechen von der Station 2 in das Fahrzeug 4 ermöglichen (in Kombination mit Sensordaten eines Mikrofons auch als Gegensprechen) oder es kann mit Kommunikationsdaten eine WLAN-Verbindung für den Fahrgast (im Bedarfsfall in Kombination mit entsprechenden Sensordaten eines mobilen Endgeräts des Fahrgastes) ermöglicht werden.

Als Fahrzeugdaten FD werden im Sinne der Erfindung sowohl Sensordaten SD, als auch Steuerdaten StD verstanden, wobei nicht zwingend Sensordaten SD und Steuerdaten StD genutzt werden müssen. In einer unidirektionalen Kommunikation werden beispielsweise nur Sensordaten SD oder nur Steuerdaten StD übertragen, in einer bidirektionalen Kommunikation beide.

Am Fahrzeug 4 ist beispielsweise eine Verrieglungseinheit 7 vorgesehen, mit der die geschlossene Verschlusseinrichtung 5 verriegelt wird, sodass ein unabsichtliches oder missbräuchliches Öffnen der Verschlusseinrichtung 5 verhindert wird. Hierfür könnten beispielsweise Steuerdaten StD von einer Seilbahnsteuerung 13 zur Verschlusseinrichtung 5 übertragen werden, um die Verschlusseinrichtung 5 zum Schließen und die Verriegelungseinheit 7 zum Verriegeln der geschlossenen Verschlusseinrichtung 5 zu betätigen. Über eine Verrieglungsüberwachung 8 kann der Zustand der Verriegelungseinheit 7 erfasst werden. Die Verrieglungsüberwachung 8 ist als Fahrzeugsensor 8, beispielsweise als elektrischer Endschalter mit Doppelkontakt (Öffner, Schließer), ausgeführt, der den Verriegelungszustand der Verriegelungseinheit 7 erfasst, also ob die Verriegelung erfolgt ist oder nicht. Der Verriegelungszustand kann als Sensordaten SD an eine Seilbahnsteuerung 13 übertragen werden. Auf ähnliche Weise lässt sich eine Datenverbindung zwischen anderen Verbrauchern 12 des Fahrzeugs 4 und der Seilbahnsteuerung 13 realisieren. Der Verbraucher 12 kann eine Anzeigeeinheit (z.B. ein Lautsprecher, Monitor, Signalleuchte usw.), eine Beleuchtung, ein elektrischer Verschlussantrieb 3 einer Verschlusseinrichtung 5 des Fahrzeugs 4, ein Fahrzeugenergiespeicher 20, eine Klimaanlage, eine Lüftung, eine Sitzheizung, eine Scheibenheizung, ein WLAN Modem usw. sein.

In der Station 2 ist eine Stromschiene 10 vorgesehen, über die das Fahrzeug 4 oder ein Verbraucher 12 des Fahrzeugs 4 bedarfsweise mit elektrischer Energie versorgt werden kann. Dazu ist am Fahrzeug 4 ein Stromabnehmer 11, beispielsweise ein Schleifkontakt, vorgesehen, der die Stromschiene 10 zumindest zeitweise elektrisch kontaktiert. Vorzugsweise kommt der Stromabnehmer 11 während der Bewegung des Fahrzeugs 4 für eine bestimmte Zeit in Kontakt mit der Stromschiene 10. Die Stromschiene 10 kann der elektrischen Versorgung zumindest eines elektrischen Verbrauchers 12 des Fahrzeugs 4 dienen.

Beispielsweise wird in der Station 2 mit einem elektrischen Verschlussantrieb 3 die Verschlusseinrichtung 5 geöffnet, um das Aus- und Zusteigen von Passagieren zu ermöglichen. Das Fahrzeug 4 kann dazu in der Station 2 stillstehen oder mit niedriger Geschwindigkeit durch die Station 2 bewegt werden. Vor der Stationsausfahrt 6 der Station 2 wird die Verschlusseinrichtung 5 mittels des elektrischen Verschlussantriebs 3 elektrisch geschlossen. Während der Stromversorgung über die Stromschiene 10 kann der elektrische Verschlussantrieb 3 betätigt werden, um die Verschlusseinrichtung 5 zu öffnen oder zu schließen.

Es können in der Station 2 natürlich mehrere Stromschienen 10 vorgesehen sein. Beispielsweise eine erste Stromschiene 10 im Bereich vor einer Einstiegs- und Ausstiegsstelle oder nach einer Stationseinfahrt, um den elektrischen Verschlussantrieb 3 zum Öffnen der Verschlusseinrichtung 5 mit elektrischer Energie zu versorgen. Im Bereich vor der Stationsausfahrt 6 aus der Station 2 kann eine weitere Stromschiene 10 vorgesehen sein, um den Verschlussantrieb 3 zum Schließen der Verschlusseinrichtung 5 mit elektrischer Energie zu versorgen. Es kann aber natürlich auch nur eine einzige Stromschiene 10 zur elektrischen Versorgung des Verschlussantriebs 3 in der Station 2 vorgesehen sein. Eine Stromschiene 10 kann auch an einer beliebigen anderen Stelle der Seilbahn 1 vorgesehen sein, beispielsweise an einer Seilbahnstütze zwischen den Stationen 2 oder vor einer Stationseinfahrt oder nach einer Stationsausfahrt 6.

Eine Stromschiene 10 erstreckt sich aber nur eine gewissen Länge in Bewegungsrichtung des Fahrzeugs 4, aber nicht entlang des gesamten Bewegungsbereichs des Fahrzeugs 4. Ist die Stromschiene 10 in einer Station 2 angeordnet, dann erstreckt sich die Stromschienen 10 in Bewegungsrichtung eine gewisse Länge in der Station 2. Üblicherweise ist die Länge einer Stromschiene deutlich kürzer als der gesamte Bewegungsbereich des Fahrzeugs 4.

Es ist ferner eine Seilbahnsteuerung 13 vorgesehen, die den Betrieb der Seilbahn 1 steuert und überwacht. Die Seilbahnsteuerung 13 kann an einer beliebigen Stelle der Seilbahn 1 angeordnet sein, entweder in der ersten Station 2 oder einer anderen Station. Auch eine verteilte Steuerung der Seilbahn 1, mit mehreren in Verbindung stehenden Steuereinheiten, ist als Seilbahnsteuerung 13 grundsätzlich denkbar. Die Seilbahnsteuerung 13, oder eine einzelne Steuereinheit der Seilbahnsteuerung, kann als prozessorbasierte Hardware ausgeführt sein, auf der Steuersoftware läuft, beispielsweise ein Computer, ein Mikroprozessor oder eine speicherprogrammierbare Steuerung. Auch eine Implementierung als integrierter Schaltkreis (IC), beispielsweise als anwendungsspezifische integrierte Schaltung (ASIC) oder Field Programmable Gate Array (FPGA), ist denkbar. Einzelne Steuereinheiten können auch als analoge Schaltkreise implementiert sein. Ebenso sind Mischformen möglich.

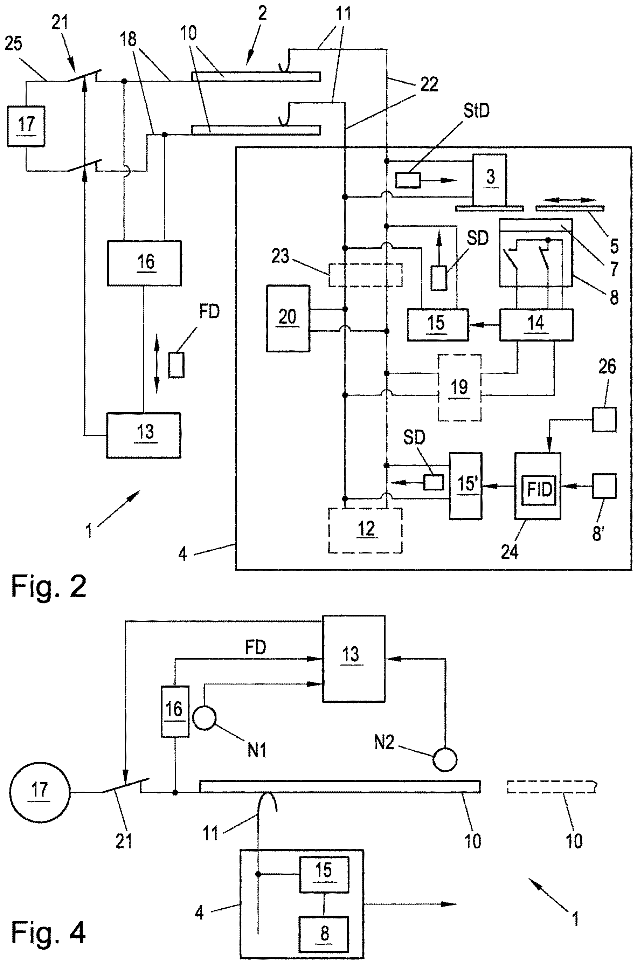

Zur Übermittlung von Fahrzeugdaten FD vom Fahrzeug 4 zur Seilbahnsteuerung 13 oder umgekehrt ist vorgesehen, vorzugsweise vorhandene, elektrische Leitungen 25 zur elektrischen Versorgung der Seilbahn 1 zum Aufbau eines lokalen Netzwerks zur Datenübertragung zu nutzen, so dass keine zusätzliche Verkabelung notwendig ist. Alternativ kann aber natürlich auch eine (ganz oder teilweise) eigene Verkabelung für die Übermittlung der Fahrzeugdaten FD vorgesehen sein. Die elektrische Leitung 25 ist beispielsweise Teil der elektrischen Energieversorgung der Seilbahn, beispielsweise ein einphasiges oder mehrphasiges Seilbahnstromnetz. In Fig.1 ist beispielsweise eine Gleichspannung (z.B. ±24VDC) Energieversorgung 17 vorgesehen. Zur Übertragung der Fahrzeugdaten FD wird eine, beispielsweise standardisierte oder proprietäre, Powerline Kommunikation verwendet, wie anhand von Fig.2 näher erläutert wird.

Zum Aufbau und zur Durchführung einer Powerline Kommunikation ist am Fahrzeug 4 ein Fahrzeug-Powerlinemodem 15 vorgesehen, das mit dem Stromabnehmer 11 elektrisch verbunden ist, und in der Station 2 ein Steuerung-Powerlinemodem 16 vorgesehen, das mit der Stromschiene 10 elektrisch verbunden ist. Die Stromschiene 10 ist dazu vorzugsweise ortsfest in der Seilbahn 1 angeordnet, beispielsweise an einem ortsfesten Bauteil der Seilbahn 1, wie in der Station 2 oder einer Seilbahnstütze. Üblicherweise ist die Stromschiene 10 und der Stromabnehmer 11 mehrphasig ausgeführt, beispielsweise zweiphasig wie in Fig.2. Das Steuerung-Powerlinemodem 16 ist mit der Seilbahnsteuerung 13 in Datenkommunikationsverbindung. Wenn der Stromabnehmer 11 die Stromschiene 10 kontaktiert, kann demzufolge eine Powerline Kommunikation vom Fahrzeug-Powerlinemodem 15 über den Stromabnehmer 11, die Stromschiene 10 und dem Steuerung-Powerlinemodem 16 zur Seilbahnsteuerung 13, und umgekehrt, aufgebaut werden. Die Zeitspanne währenddessen der Stromabnehmer 11 mit der Stromschiene 10 verbunden ist, kann daher zur Powerline Kommunikation genutzt werden, um Fahrzeugdaten FD auszutauschen. Nachdem die Länge der Stromschiene 10 begrenzt ist, und sich die Stromschiene 10 nicht entlang des gesamten Bewegungsbereichs des Fahrzeugs 4 erstreckt, ist folglich auch die mögliche Dauer der Powerline Kommunikation begrenzt.

Zur Datenübertragung zwischen Fahrzeug 4 und der Seilbahnsteuerung 13 mittels Powerline Kommunikation ist vorgesehen, dass der Stromabnehmer 11 des Fahrzeugs 4 während der Bewegung (was auch einen Stillstand des Fahrzeugs 4 umfasst) zumindest während einer bestimmten Zeitspanne (die sich im Wesentlichen aus der Länge der Stromschiene 10 und der Geschwindigkeit des Fahrzeugs 4 ergibt) die Stromschiene 10 kontaktiert. Die Stromschiene 10 ist wie oben erläutert über ein Steuerung-Powerlinemodem 16 mit der Seilbahnsteuerung 13 verbunden und der Stromabnehmer 11 am Fahrzeug 4 ist mit einem Fahrzeug-Powerlinemodem 16 verbunden. Sobald der Stromabnehmer 11 des Fahrzeugs 4 eine Stromschiene 10 an der Seilbahn 1 kontaktiert, kann der Verbindungsaufbau zur Powerline Kommunikation erfolgen. Die Stromschiene 10 ist damit zumindest dort an der Seilbahn 1 angeordnet, wo eine Powerline Kommunikation zur Übermittlung von Fahrzeugdaten FD erforderlich ist. Im einfachsten Fall stellen das Fahrzeug-Powerlinemodem 15 und das Steuerung-Powerlinemodem 16 eine bestehende Verbindung fest, beispielsweise durch Empfang einer von einem der verbundenen Powerlinemodems 15, 16 gesendeten Trägerfrequenz, und starten die Powerline Kommunikation. Der Verbindungsaufbau kann auch das Hochfahren des Fahrzeug-Powerlinemodems 15 umfassen, beispielsweise wenn dieses vorher ohne Stromversorgung war und nun über die Stromschiene 10 elektrisch versorgt wird oder vorher keine Powerline Kommunikation durchzuführen war. "Verbindungsaufbau" bedeutet beispielsweise, dass das Fahrzeug-Powerlinemodem 15 die Trägerfrequenz der Powerline Kommunikation erzeugt und vom Fahrzeug-Powerlinemodem 15 an den Stromabnehmer 11 angelegt wird, womit die Powerline Kommunikation erfolgen kann. Das dauert typischerweise ungefähr 1 bis 2 Sekunden.

Signale eines Fahrzeugsensors 8, im Ausführungsbeispiel z.B. in Form einer Verrieglungsüberwachung (im Beispiel nach Fig.2 ein Endschalter mit Doppelkontakt), können in einer Sensorauswerteeinheit 14 ausgewertet werden. Der mit dem Fahrzeugsensor 8 überwachte Fahrzeugzustand, hier z.B. der Verriegelungszustand, wird als Ergebnis der Auswertung in der Sensorauswerteeinheit 14 mit einem Fahrzeug-Powerlinemodem 15 als Sensordaten SD an die Seilbahnsteuerung 13 übertragen. Das Fahrzeug-Powerlinemodem 15 kann natürlich auch in der Sensorauswerteeinheit 14 integriert sein. Der Fahrzeugsensor 8 kann natürlich die Sensordaten SD auch direkt ohne Verarbeitung in einer Sensorauswerteeinheit 14 mit einem Fahrzeug-Powerlinemodem 15 übertragen. Hierfür kann das Fahrzeug-Powerlinemodem 15 auch in einem Fahrzeugsensor 8 integriert sein. Das Fahrzeug-Powerlinemodem 15 ist zur Datenübertragung mit dem Stromabnehmer 11 verbunden, beispielsweise über eine elektrische Zuleitung 22 zum Fahrzeug 4, die wiederum mit dem Stromabnehmer 11 verbunden ist.

Die Sensorauswerteeinheit 14 kann als prozessorbasierte Hardware ausgeführt sein, auf der Auswertesoftware läuft, beispielsweise in Form eines Embedded Controller oder Mikrocontroller. Auch eine Implementierung als integrierter Schaltkreis (IC), beispielsweise als anwendungsspezifische integrierte Schaltung (ASIC) oder Field Programmable Gate Array (FPGA), ist denkbar. Die Sensorauswerteeinheit 14 kann auch als analoger Schaltkreis implementiert sein. Die Powerlinemodem 15, 16 sind üblicherweise elektronische Bauteile (beispielsweise ein Ein-Chip-System), unter Umständen auch mit einem Mikroprozessor und Firmware.

Es kann am Fahrzeug 4 auch eine Speichereinheit 24 vorgesehen sein, um Sensordaten SD von einem Fahrzeugsensor 8`, beispielsweise ein 3D-Beschleunigungssensor, zu speichern, wie in Fig.2 dargestellt. Das kann beispielsweise dann erforderlich sein, wenn die Sensordaten SD erzeugt werden, wenn keine Powerline Kommunikation möglich ist, beispielsweise wenn sich das Fahrzeug auf der Strecke zwischen zwei Stationen 2 befindet. In der Speichereinheit 24 kann auch eine eindeutige Fahrzeugidentifikation gespeichert sein. Die Fahrzeugidentifikation FID kann an geeigneter Stelle auch mittels Steuerdaten StD von der Seilbahnsteuerung 13 an das Fahrzeug 4 zum Ablegen in der Speichereinheit 24 übertragen werden. Sobald der Stromabnehmer 11 mit einer Stromschiene 10 in Kontakt kommt, können Sensordaten SD aus der Speichereinheit SD zur Seilbahnsteuerung 13 übertragen werden, oder umgekehrt Steuerdaten StD von der Seilbahnsteuerung 13 zur Speichereinheit 24, um darin abgelegt zu werden. Nachdem die Sensordaten SD aus der Speichereinheit 24 an die Seilbahnsteuerung 13 übertragen wurden, kann auch vorgesehen sein, diese in der Speichereinheit 24 zu löschen.

Die Speichereinheit 24 kann dazu mit einem eigenen Fahrzeug-Powerlinemodem 15' mit dem Stromabnehmer 11 verbunden sein. Es kann aber auch vorgesehen sein, dass am Fahrzeug 4 nur ein einziges Fahrzeug-Powerlinemodem 15 vorgesehen ist, über den die gesamte Powerline Kommunikation mit der Seilbahnsteuerung 13 läuft.

Wenn Sensordaten SD in einer Speichereinheit 24 zwischengespeichert werden ist es vorteilhaft, wenn die Sensordaten SD mit einem Zeitstempel versehen werden und mit dem Zeitstempel gespeichert werden. Daher ist vorteilhaft, wenn am Fahrzeug 4 eine Zeitbasis 26, beispielsweise eine Echtzeituhr (RTC, real time clock) vorgesehen ist, die mit der Speichereinheit 24 und/oder einem Fahrzeugsensor 8' verbunden ist. Die Zeitbasis 26 kann vorzugsweise über Steuerdaten StD von der Seilbahnsteuerung 13 eingestellt werden. Die Zeitbasis 26 wird vorzugsweise vom Energiespeicher 20 des Fahrzeugs mit elektrischer Energie versorgt.

An einem Powerlinemodem 15, 16 können verschiedene Schnittstellen implementiert sein, wie anhand von Fig.3 erläutert wird. Am Powerlinemodem 15, 16 ist eine Koppelstufe 31 vorgesehen, über die das Powerlinemodem 15, 16 an die elektrischen Leitungen, die zur Powerline Kommunikation genutzt werden soll, angeschlossen wird. Am Powerlinemodem 15 kann ein Digitaleingang 32, ein Digitalausgang 33, ein Analogeingang 34, ein Analogausgang 35 und eine Datenbusschnittstelle 36 vorgesehen sein, wobei nicht alle realisiert sein müssen. An einen Digitaleingang 32 kann eine Seilbahnsteuerung 13, eine Sensorauswerteeinheit 14 oder eine Speichereinheit 24 angeschlossen werden, um digitale Sensordaten SD oder Steuerdaten StD an das Powerlinemodem 15 zur Übermittlung zu übertragen. An einem Analogeingang 34 kann ein Fahrzeugsensor 8' zur Übertragung von Sensordaten SD angeschlossen werden. Der analoge Eingang in Form eines elektrischen Stromes oder einer elektrischen Spannung wird im Powerlinemodem 15 zur Übermittlung digitalisiert. An einen Digitalausgang 33 kann die Seilbahnsteuerung 13, eine Speichereinheit 24 oder eine digitale Schnittstelle eines Verbrauchers 12 angeschlossen werden, um Steuerdaten StD zu übertragen. An einen Analogausgang 35 kann eine analoge Schnittstelle eines Verbrauchers 12 angeschlossen werden, um Steuerdaten StD zu übertragen. Ferner kann eine Busschnittstelle 36, beispielsweise eine CAN-, Ethernet/IP-, Profinet-, Profibus- oder Powerlink-Busschnittstelle (um einige nicht abschließend zu nennen), vorgesehen sein, um mit bestimmten Verbrauchern 12 am Fahrzeug 4 oder mit der Seilbahnsteuerung 13 mit einem vorgegebenen Busprotokoll kommunizieren zu können. Ein solcher Verbraucher oder die Seilbahnsteuerung 13 hat natürlich auch eine entsprechende Busschnittstelle. Die Funktionen des Powerlinemodems 15, 16 können mit einer Modemsteuereinheit 30 gesteuert werden. Ebenso kann am Powerlinemodem 15, 16 ein nicht dargestellter Spannungsversorgungseingang vorgesehen sein, oder die Spannungsversorgung wird über die Koppelstufe 31 realisiert.

Die Stromschiene 10 (in Fig.2 zweiphasig für Phase und Nullleiter oder ±DC) kann über eine elektrische Versorgungsleitung 18 (in Fig.2 zweiphasig) von einer elektrischen Stromversorgung 17 der Seilbahn 1 mit elektrischer Energie versorgt, beispielsweise mit ±24VDC. An die Versorgungsleitung 18 kann das Steuerungs-Powerlinemodem 16 angeschlossen sein, das mit der Seilbahnsteuerung 13 in Verbindung steht. Das Steuerungs-Powerlinemodem 16 kann natürlich auch in der Seilbahnsteuerung 13 integriert sein.

Die elektrische Versorgung der Stromschiene 10 durch die Stromversorgung 17 kann mit einer Trenneinheit 21 auch unterbrochen werden, beispielsweise gesteuert von der Seilbahnsteuerung 13. Die Trenneinheit 21 ist vorzugsweise so vorzusehen, dass dadurch die elektrische Verbindung zwischen dem Steuerungs-Powerlinemodem 16 und der Stromschiene 10 nicht unterbrochen wird, sondern nur die elektrische Versorgung der Stromschiene 10.

Die Stromschiene 10 muss zur Powerline Kommunikation aber nicht aktiv durch eine Stromversorgung 17 bestromt sein. Die Stromschiene 10 muss lediglich an den gewünschten Stellen die elektrische Verbindung zwischen einem Fahrzeug-Powerlinemodem 15 und dem Steuerung-Powerlinemodem 16 herstellen.

Wenn der Stromabnehmer 11 des Fahrzeugs 4 die Stromschiene 10 elektrisch kontaktiert, besteht eine elektrische Verbindung zwischen dem Fahrzeug-Powerlinemodem 15 und dem Steuerung-Powerlinemodem 16, über dem eine Powerline Kommunikation erfolgen kann. Damit können Fahrzeugdaten FD von einem Fahrzeug-Powerlinemodem 15 zum Steuerung-Powerlinemodem 16 übertragen werden, oder umgekehrt. Hierfür kann ein beliebiges Datenkommunikationsprotokoll implementiert sein. Für die Übertragung von Fahrzeugdaten FD kann daher auf bestehende Einrichtungen der Seilbahn 1 zurückgegriffen werden.

Lediglich Powerlinemodems 15, 16 sind zusätzlich vorzusehen, was aber mit geringem Aufwand und Kosten möglich ist.

Eine Sensorauswerteeinheit 14 kann ebenfalls über die Zuleitung 22 mit elektrischer Energie versorgt werden. Vorzugsweise ist die Sensorauswerteeinheit 14 aktiv, wenn die Zuleitung 22 unter elektrischer Spannung steht. Hierfür kann auch ein Spannungswandler 19 vorgesehen sein, um eine benötigte Versorgungsspannung der Sensorauswerteeinheit 14 zu erzeugen, z.B. 5VDC. Die Sensorauswerteeinheit 14 und das Fahrzeug-Powerlinemodem 15 kann aber auch von einem elektrischen Energiespeicher 20 am Fahrzeug 4, beispielswiese einer Batterie (Bleibatterie, Superkondensator, Lithium-Ionen-Batterie usw.) versorgt werden. In Zeiten in denen keine Stromversorgung über eine Stromschiene 10 erfolgt, kann beispielsweise der elektrische Energiespeicher 20 genutzt werden und ansonsten die Stromschiene 10. Wenn das Fahrzeug 4 nicht mit der Stromschiene 10 verbunden ist, kann mit dem Energiespeicher 20 bedarfsweise auch eine elektrische Versorgung gewisser Verbraucher 12 des Fahrzeugs 4 zumindest für eine bestimmten Zeitspanne aufrechterhalten werden. Der Energiespeicher 20 kann daher auch zur elektrischen Versorgung eines Fahrzeug-Powerlinemodems 15 zur Durchführung einer Powerline Kommunikation genutzt werden. Der Energiespeicher 20 kann bedarfsweise auch über die Stromschiene 10 geladen werden.

Zwischen dem Fahrzeug-Powerlinemodem 15 oder dem Steuerung-Powerlinemodem 16 (oder auch beiden) und dem Stromabnehmer 11 bzw. der Stromschiene 10 kann auch ein bekanntes Powerline-Kopplungsnetzwerk, beispielsweise ein Transformator, ein Filter usw., vorgesehen sein. Ein solches Powerline-Kopplungsnetzwerk kann natürlich auch im jeweiligen Powerlinemodem 15, 16 integriert sein.

In der Zuleitung 22 kann zwischen dem Verschlussantrieb 3 und dem Energiespeicher 20 auch ein Gleichrichter 23 vorgesehen sein, beispielsweise ein Dioden-Brückengleichrichter. Der Gleichrichter 23 kann aus einer bipolaren Versorgungsspannung (z.B. ±24VDC) oder einer Wechselspannung als Versorgungsspannung eine unipolare Speisespannung für die Sensorauswerteeinheit 14 und/oder andere Verbraucher 12 erzeugen, auch über einen Spannungswandler 19. Gleichzeitig stellt der Gleichrichter 23 auch die Rückwirkungsfreiheit des Energiespeichers 20 in Richtung des Verschlussantriebs 3 sicher, weil der Gleichrichter keinen Energiefluss in die entgegengesetzte Richtung zulässt. Ein solcher Gleichrichter 23 darf natürlich nicht die Powerline Kommunikation unterbrechen und ist daher im Fahrzeug 4 entsprechend anzuordnen.

Um Störungen durch die Powerline Kommunikation über die elektrischen Leitungen zu verhindern, kann vor einem Verbraucher 12 des Fahrzeugs 4 auch ein Tiefpassfilter zur Entkopplung der Versorgungsspannung und der Powerline Kommunikation vorgesehen sein.

Dasselbe kann natürlich auch auf der Seite der Seilbahnsteuerung 13 vor der Stromversorgung 17 vorgesehen sein.

Um Fahrzeugdaten FD mittels Powerline Kommunikation vom Fahrzeug 4 an die Seilbahnsteuerung 13 zu übertragen, oder auch umgekehrt, kann mit Bezugnahme auf die Fig.4 wie folgt vorgegangen werden.

Das Fahrzeug 4 bewegt sich in Bewegungsrichtung (angedeutet durch den Pfeil), beispielsweise in einer Station 2. Wenn das Fahrzeug 4 im Bereich einer Stromschiene 10, beispielsweise in einer Station 2 oder an einer Seilbahnstütze, kommt, kann die Stromschiene 10 aktiviert werden, beispielsweise indem die Trenneinheit 21 der Stromversorgung 17 (die vorher offen war) geschlossen wird. Das kann die Seilbahnsteuerung 13 veranlassen. Das Aktivieren der Stromschiene 10 erfolgt vorzugsweise nachdem der Stromabnehmer 11 die Stromschiene 10 kontaktiert hat, um Funkenüberschlag zu verhindern. Hierfür kann beispielsweise ein erster Näherungsschalter N1 in der Station 2 vorgesehen sein, der die Position des Fahrzeugs 4 erkennt. Die Position des Fahrzeugs 4 kann aber natürlich auch auf beliebig andere Weise erkannt werden, beispielsweise durch die Auswertung der bekannten Geschwindigkeiten des Fahrzeugs 4 in der Station 2 oder am Seil 9. Mit Aktivierung der Stromschiene 10 kann das Fahrzeug-Powerlinemodem 15, 15` hochfahren, wenn es vorher inaktiv war. Ebenso können dadurch Verbraucher 12, wie ein Fahrzeugsensor 8, 8` oder eine Speichereinheit 24, hochfahren, wenn diese vorher inaktiv waren. Wenn ein Fahrzeugsensor 8, 8' oder die Speichereinheit 24 von einem Energiespeicher 20 des Fahrzeugs 4 mit elektrischer Energie versorgt werden, kann das Hochfahren natürlich unterbleiben. Wenn das Fahrzeug-Powerlinemodem 15, 15' aktiv ist, kann der Verbindungsaufbau beginnen. Das bedeutet beispielsweise, dass die Trägerfrequenz der Powerline Kommunikation erzeugt und vom Fahrzeug-Powerlinemodem 15 an den Stromabnehmer 11 angelegt wird, womit die Powerline Kommunikation mit dem Steuerung-Powerlinemodem 16 erfolgen kann. Alternativ erkennt das Fahrzeug-Powerlinemodem 15, 15' eine Trägerfrequenz des Steuerung-Powerlinemodems 16. Das Hochfahren und der Verbindungsaufbau dauern ungefähr 1 bis 2 Sekunden. Falls der Energiespeicher 20 ausreichend dimensioniert ist, dann kann das Fahrzeug-Powerlinemodem 15 auch dauerhaft aktiv sein und das Hochfahren kann auch entfallen.

Es sei aber angemerkt, dass die erste Stromschiene 10 auch schon vor dem Kontakt des Stromabnehmers 11 oder auch permanent bestromt sein kann, beispielsweise wenn der entstehende Funkenüberschlag kein Problem darstellt. Eine Unterbrechung des Stromflusses zum Zeitpunkt des Kontaktes um Funken zu vermeiden, könnte aber auch fahrzeugseitig implementiert sein. Bei diesen Ausführungsformen kann auch auf den ersten Näherungsschalter N1 verzichtet werden.

Wenn die erste Stromschiene 10 nur zur Powerline Kommunikation genutzt wird und nicht dazu, um elektrische Energie von der Station 2 auf das Fahrzeug 4 zu übertragen, dann kann auf den ersten Näherungsschalter N1 ebenso verzichtet werden.

Solange das Fahrzeug 4 über den Stromabnehmer 11 in Verbindung mit der Stromschiene 10 ist, kann eine Powerline Kommunikation mit der Seilbahnsteuerung 13 erfolgen, um Fahrzeugdaten FD auszutauschen. Während dieser Zeit können die Fahrzeugdaten FD, wie eine Fahrzeugidentifikation FID, Sensorwerte SD, verarbeitete Sensorwerte, Steuerdaten StD usw., vom Fahrzeug 4 an die Seilbahnsteuerung 13, oder umgekehrt, übertragen werden.

Vorzugsweise bevor die Verbindung zwischen Stromabnehmer 11 des Fahrzeugs 4 und der Stromschiene 10 durch die Bewegung des Fahrzeugs 4 beendet wird, wird die Stromschiene 10 deaktiviert. Auch hierfür kann ein zweiter Näherungsschalter N2 vorgesehen sein, mit dem der Seilbahnsteuerung 13 eine bestimmte Position des Fahrzeugs 4 im Bereich der Stromschiene 10 signalisiert wird. Wie vorhin, kann anstelle des zweiten Näherungssensors N2 auch eine andere Positionserkennung vorgesehen sein. Beim Deaktivieren ist der Stromabnehmer 11 vorzugsweise noch in Kontakt mit der Stromschiene 10 und das Deaktivieren kann durch die Seilbahnsteuerung 13 durch das Öffnen der Trenneinheit 21 der Stromversorgung 17 erfolgen. Nach dem Deaktivieren der Stromschiene 10 kann der Energiespeicher 20 das Fahrzeug-Powerlinemodem 15, 15' weiter mit elektrischer Energie versorgen, zumindest für eine bestimmte Zeitspanne. Solange das Fahrzeug 4 über den Stromabnehmer 11 in Kontakt mit der Stromschiene 10 ist, kann die Powerline Kommunikation aufrechterhalten werde.

Es ist auch denkbar, dass die Seilbahnsteuerung 13 dem Fahrzeug 4 zuerst mittels Steuerdaten StD der Powerline Kommunikation signalisiert, welche Fahrzeugdaten FD zu übertragen sind. Das kann beispielsweise durch das implementierte Datenkommunikationsprotokoll erfolgen.

Zwischen dem Zeitpunkt der Deaktivierung der Stromschiene 10 und dem Erreichen des Endes der Stromschiene 10, an dem der Kontakt zwischen dem Stromabnehmer 11 und der Stromschiene 10 durch die Bewegung des Fahrzeugs 4 unterbrochen wird, kann weiter die Powerline Kommunikation zur Seilbahnsteuerung 13 mittels der Powerlinemodems 15, 16 erfolgen. Das kann beispielsweise genutzt werden, um die Powerline Kommunikation in geordneter Weise zu beenden. Der Energiespeicher 20 wird daher vorzugsweise entsprechend dimensioniert, um die für die Powerline Kommunikation benötigte elektrische Leistung während dieser Zeitspanne bereitstellen zu können. Das Erreichen des Endes der Stromschiene 10 kann wieder mittels eines dritten Näherungsschalters (nicht dargestellt) erkannt werden, oder durch eine beliebige andere Positionserkennung.

In der Seilbahn 1 können noch weitere Stromschienen 10 vorgesehen sein, wie in Fig.3 angedeutet. Sobald das Fahrzeug 4 durch dessen Bewegung Kontakt mit einer weiteren Stromschienen 10 erhält, kann erneut die Powerline Kommunikation angestoßen werden, um Fahrzeugdaten FD auszutauschen.

Eine Stromschiene 10 und/oder ein Stromabnehmer 11 können auch beheizt sein, um eine Vereisung, was die Powerline Kommunikation stören könnte, zu verhindern.

## Patentansprüche

1. Verfahren zur Datenkommunikation zwischen einer Seilbahnsteuerung (13) und zumindest einem Fahrzeug (4) einer Seilbahn (1), wobei im Betrieb der Seilbahn (1) ein Stromabnehmer (11) des Fahrzeugs (4) durch die Bewegung des Fahrzeugs (4) eine Stromschiene (10) kontaktiert, **dadurch gekennzeichnet, dass** ein Fahrzeug-Powerlinemodem (15, 15') des Fahrzeugs (4) mit dem Stromabnehmer (11) verbunden wird und ein Steuerungs-Powerlinemodem (16) mit der Stromschiene (10) und der Seilbahnsteuerung (13) verbunden wird **und dass** während der Stromabnehmer (11) die Stromschiene (10) kontaktiert eine Powerline Kommunikationsverbindung zwischen dem Fahrzeug-Powerlinemodem (15, 15`) und dem Steuerungs-Powerlinemodem (16) hergestellt wird, über die Fahrzeugdaten (FD) vom Fahrzeug (4) an die Seilbahnsteuerung (13) oder umgekehrt übertragen werden.

2. Verfahren nach Anspruch 1, **dadurch gekennzeichnet, dass** ein Verbraucher (12) des Fahrzeugs (4) mit Fahrzeugdaten (FD) in Form von Steuerdaten (StD), die mit der Powerline Kommunikation von der Seilbahnsteuerung (13) an das Fahrzeug (4) übertragen werden, gesteuert wird.

3. Verfahren nach Anspruch 1, **dadurch gekennzeichnet, dass** die Seilbahn (1) von der Seilbahnsteuerung (13) mit Fahrzeugdaten (FD) in Form von Sensordaten (SD), die am Fahrzeug von einem Fahrzeugsensor (8, 8') erzeugt werden und mit der Powerline Kommunikation vom Fahrzeug (4) zur Seilbahnsteuerung (13) übertragen werden, gesteuert oder überwacht wird.

4. Verfahren nach Anspruch 3, **dadurch gekennzeichnet, dass** die Sensordaten (SD) während einer Zeitspanne ohne Kontakt zwischen Stromabnehmer (11) und Stromschiene (10) in einer Speichereinheit (24) des Fahrzeugs (4) gespeichert werden, vorzugsweise gemeinsam mit einem Zeitstempel der Erzeugung der Sensordaten (SD), und während einer Zeitspanne mit Kontakt zwischen Stromabnehmer (11) und Stromschiene (10) von der Speichereinheit (24) mit dem Fahrzeug-Powerlinemodem (15, 15') an die Seilbahnsteuerung (13) übertragen werden.

5. Verfahren nach einem der Ansprüche 1 bis 4, **dadurch gekennzeichnet, dass** ein Fahrzeug (4) bei Kontakt des Stromabnehmers (11) mit der Stromschiene (10) zumindest zeitweise über die Stromschiene (10) mit elektrischer Energie versorgt wird.

6. Seilbahn mit Datenkommunikation zwischen zumindest einem Fahrzeug (4) und einer Seilbahnsteuerung (13) der Seilbahn (1), wobei an der Seilbahn (1) eine Stromschiene (10) angeordnet ist und am Fahrzeug (4) ein Stromabnehmer (11) vorgesehen ist, wobei im Betrieb der Seilbahn (1) der Stromabnehmer (11) durch die Bewegung des Fahrzeugs (4) die Stromschiene (10) kontaktiert, **dadurch gekennzeichnet, dass** am Fahrzeug (4) ein Fahrzeug-Powerlinemodem (15, 15') vorgesehen ist, das mit dem Stromabnehmer (11) verbunden ist, und an der Seilbahn (1) ein Steuerung-Powerlinemodem (16) vorgesehen ist, das mit der Stromschiene (10) und der Seilbahnsteuerung (13) verbunden ist **und dass** während der Stromabnehmer (11) die Stromschiene (10) kontaktiert eine Powerline Kommunikationsverbindung zwischen dem Fahrzeug-Powerlinemodem (15, 15') und dem Steuerung-Powerlinemodem (16) hergestellt ist, über die Fahrzeugdaten (FD) vom Fahrzeug (4) an die Seilbahnsteuerung (13) oder umgekehrt übertragbar sind.

7. Seilbahn nach Anspruch 6, **dadurch gekennzeichnet, dass** die Seilbahnsteuerung (13) mit dem Steuerung-Powerlinemodem (16) mit Powerline Kommunikation Fahrzeugdaten (FD) in Form von Steuerdaten (StD) an das Fahrzeug (4) überträgt und am Fahrzeug (4) ein Verbraucher (12) vorgesehen ist, der mit den Steuerdaten (StD) steuerbar ist.

8. Seilbahn nach Anspruch 6, **dadurch gekennzeichnet, dass** am Fahrzeug (4) ein Fahrzeugsensor (8, 8') vorgesehen ist, der Fahrzeugdaten (FD) in Form von Sensordaten (SD) erzeugt, und das Fahrzeug (4) die Sensordaten (SD) mit dem Fahrzeug-Powerlinemodem mit Powerline Kommunikation an die Seilbahnsteuerung (13) überträgt und die Seilbahnsteuerung (13) die Seilbahn (1) anhand der Sensordaten (SD) steuert oder überwacht.

9. Seilbahn nach Anspruch 8, **dadurch gekennzeichnet, dass** am Fahrzeug (4) eine Speichereinheit (24) vorgesehen ist, die erzeugte Sensordaten (24) während einer Zeitspanne ohne Kontakt zwischen Stromabnehmer (11) und Stromschiene (10) speichert, vorzugsweise gemeinsam mit einem Zeitstempel der Erzeugung der Sensordaten (SD), und das Fahrzeug (4) die gespeicherten Sensordaten (SD) mit dem Fahrzeug-Powerlinemodem (15, 15') mit Powerline Kommunikation während einer Zeitspanne mit Kontakt zwischen Stromabnehmer (11) und Stromschiene (10) von der Speichereinheit (24) an die Seilbahnsteuerung (13) überträgt.

10. Seilbahn nach einem der Ansprüche 6 bis 9, **dadurch gekennzeichnet, dass** die Stromschiene (10) zur elektrischen Versorgung des Fahrzeugs (4) vorgesehen ist, wenn der Stromabnehmer (11) des Fahrzeugs (4) die Stromschiene (10) kontaktiert.

## Claims

1. Method for data communication between a cableway controller (13) and at least one vehicle (4) of a cableway (1), wherein during operation of the cableway (1) a current collector (11) of the vehicle (4) contacts a busbar (10) by the movement of the vehicle (4), **characterized in that** a vehicle powerline modem (15, 15') of the vehicle (4) is connected to the current collector (11), and a control powerline modem (16) is connected to the busbar (10) and the cableway controller (13), **and in that,** while the current collector (11) contacts the busbar (10), a power line communication connection between the vehicle powerline modem (15, 15') and the control powerline modem (16) is established, via which connection vehicle data (FD) are transmitted from the vehicle (4) to the cableway controller (13) or vice versa.

2. Method according to claim 1, **characterized in that** a consumer (12) of the vehicle (4) is controlled using vehicle data (FD) in the form of control data (StD) which are transmitted to the vehicle (4) from the cableway controller (13) via the powerline communication.

3. Method according to claim 1, **characterized in that** the cableway (1) is controlled or monitored by the cableway controller (13) using vehicle data (FD) in the form of sensor data (SD) which are generated on the vehicle (4) by a vehicle sensor (8, 8') and are transmitted from the vehicle (4) to the cableway controller (13) by means of the powerline communication.

4. Method according to claim 3, **characterized in that** the sensor data (SD) are stored, during a period of time without contact between the current collector (11) and the busbar (10), in a memory unit (24) of the vehicle (4), preferably together with a time stamp of the generation of the sensor data (SD), and are transmitted to the cableway controller (13) from the memory unit (24) via the vehicle powerline modem (15, 15') during a period of time with contact between the current collector (11) and the busbar (10).

5. Method according to any of claims 1 to 4, **characterized in that** a vehicle (4) is supplied with electrical energy at least temporarily via the busbar (10) when the current collector (11) is in contact with the busbar (10).

6. Cableway having data communication between at least one vehicle (4) and a cableway controller (13) of the cableway (1), wherein a busbar (10) is arranged on the cableway (1) and a current collector (11) is provided on the vehicle (4), wherein the current collector (11) contacts the busbar (10) by the movement of the vehicle (4) during operation of the cableway (1), **characterized in that** a vehicle powerline modem (15, 15') is provided on the vehicle (4), which modem is connected to the current collector (11), and a control powerline modem (16) is provided on the cableway (1), which modem is connected to the busbar (10) and the cableway controller (13) **and in that,** while the current collector (11) contacts the busbar (10), a powerline communication connection is established between the vehicle powerline modem (15, 15') and the control powerline modem (16), via which connection the vehicle data (FD) can be transmitted from the vehicle (4) to the cableway controller (13) or vice versa.

7. Cableway according to claim 6, **characterized in that** the cableway controller (13) transmits vehicle data (FD) in the form of control data (StD) to the vehicle (4) by means of the control powerline modem (16), and a consumer (12) is provided on the vehicle (4), which consumer can be controlled using the control data (StD).

8. Cableway according to claim 6, **characterized in that** a vehicle sensor (8, 8') is provided on the vehicle (4), which sensor generates vehicle data (FD) in the form of sensor data (SD), and the vehicle (4) transmits the sensor data (SD) to the cableway controller (13) by means of the vehicle powerline modem (15) via powerline communication, and the cableway controller (13) controls or monitors the cableway (1) on the basis of the sensor data (SD).

9. Cableway according to claim 8, **characterized in that** a memory unit (24) is provided on the vehicle (4), which stores generated sensor data (24) during a period of time without contact between the current collector (11) and the busbar (10), preferably together with a time stamp of the generation of the sensor data (SD), and the vehicle (4) transmits the stored sensor data (SD) from the memory unit (24) to the cableway controller (13) by means of the vehicle powerline modem (15, 15') via powerline communication during a period of time with contact between the current collector (11) and the busbar (10).

10. Cableway according to any of claims 6 to 9, **characterized in that** the busbar (10) is provided for the electrical supply of the vehicle (4) when the current collector (11) of the vehicle (4) contacts the busbar (10).

## Revendications

1. Procédé de communication de données entre une commande (13) de téléphérique et au moins un véhicule (4) d'un téléphérique (1), dans lequel, pendant le fonctionnement du téléphérique (1), un consommateur de courant (11) du véhicule (4) entre en contact avec un rail conducteur (10) par le mouvement du véhicule (4), **caractérisé en ce qu'**un modem à ligne de puissance (15, 15') de véhicule du véhicule (4) est relié au consommateur de courant (11) et un modem à ligne de puissance (16) de commande est relié au rail conducteur (10) et à la commande (13) de téléphérique et **en ce que,** pendant que le consommateur de courant (11) est en contact avec le rail conducteur (10), une liaison de communication à ligne de puissance est établie entre le modem à ligne de puissance (15, 15') de véhicule et le modem à ligne de puissance (16) de commande, par l'intermédiaire de laquelle des données (FD) de véhicule sont transmises à partir du véhicule (4) à la commande (13) de téléphérique ou inversement.

2. Procédé selon la revendication 1, **caractérisé en ce qu'**un consommateur (12) du véhicule (4) est commandé par des données (FD) de véhicule sous la forme de données (StD) de commande, qui sont transmises à partir de la commande (13) de téléphérique au véhicule (4) à l'aide de la communication à ligne de puissance.

3. Procédé selon la revendication 1, **caractérisé en ce que** le téléphérique (1) est commandé ou surveillé par la commande (13) de téléphérique à l'aide de données (FD) de véhicule sous la forme de données (SD) de capteur qui sont générées au niveau du véhicule par un capteur (8, 8') de véhicule et qui sont transmises à l'aide de la communication à ligne de puissance à partir du véhicule (4) à la commande (13) de téléphérique.

4. Procédé selon la revendication 3, **caractérisé en ce que** les données (SD) de capteur sont mémorisées dans une unité de mémoire (24) du véhicule (4) pendant une période sans contact entre le consommateur de courant (11) et le rail conducteur (10), de préférence conjointement avec un horodatage de la génération des données (SD) de capteur, et sont transmises à partir de l'unité de mémoire (24) à la commande (13) de téléphérique pendant une période avec contact entre le consommateur de courant (11) et le rail conducteur (10) à l'aide du modem à ligne de puissance (15, 15') de véhicule.

5. Procédé selon l'une des revendications 1 à 4, **caractérisé en ce qu'**un véhicule (4) est alimenté en énergie électrique au moins temporairement par l'intermédiaire du rail conducteur (10) lors du contact du consommateur de courant (11) avec le rail conducteur (10).

6. Téléphérique comportant une communication de données entre au moins un véhicule (4) et une commande (13) de téléphérique du téléphérique (1), un rail conducteur (10) étant agencé au niveau du téléphérique (1) et un consommateur de courant (11) étant prévu au niveau du véhicule (4), dans lequel, pendant le fonctionnement du téléphérique (1), le consommateur de courant (11) entre en contact avec le rail conducteur (10) par le mouvement du véhicule (4), **caractérisé en ce qu'**un modem à ligne de puissance (15, 15') de véhicule est prévu au niveau du véhicule (4), lequel modem est relié au consommateur de courant (11) et un modem à ligne de puissance (16) de commande est prévu au niveau du téléphérique (1), lequel modem est relié au rail conducteur (10) et à la commande (13) de téléphérique, et **en ce que,** pendant que le consommateur de courant (11) est en contact avec le rail conducteur (10), une liaison de communication à ligne de puissance est établie entre le modem à ligne de puissance (15, 15') de véhicule et le modem à ligne de puissance (16) de commande, par l'intermédiaire de laquelle des données (FD) de véhicule peuvent être transmises du véhicule (4) à la commande (13) de téléphérique ou inversement.

7. Téléphérique selon la revendication 6, **caractérisé en ce que** la commande (13) de téléphérique transmet au véhicule (4) des données (FD) de véhicule sous forme de données (StD) de commande à l'aide du modem à ligne de puissance (16) de commande par communication à ligne de puissance et un consommateur (12), qui peut être commandé par les données (StD) de commande, est prévu au niveau du véhicule (4).

8. Téléphérique selon la revendication 6, **caractérisé en ce qu'un** capteur (8, 8') de véhicule est prévu au niveau du véhicule (4), lequel capteur génère des données (FD) de véhicule sous la forme de données (SD) de capteur, et le véhicule (4) transmet les données (SD) de capteur à la commande (13) de téléphérique à l'aide du modem à ligne de puissance du véhicule par communication à ligne de puissance et la commande (13) de téléphérique commande ou surveille le téléphérique (1) à l'aide des données (SD) de capteur.

9. Téléphérique selon la revendication 8, **caractérisé en ce qu'**une unité de mémoire (24) est prévue au niveau du véhicule (4), laquelle unité mémorise des données (24) de capteur générées pendant une période sans contact entre le consommateur de courant (11) et le rail conducteur (10), de préférence conjointement avec un horodatage de la génération des données (SD) de capteur, et le véhicule (4) transmet les données (SD) de capteur mémorisées à l'aide du modem à ligne de puissance (15, 15') de véhicule par communication à ligne de puissance pendant une période avec contact entre le consommateur de courant (11) et le rail conducteur (10) à partir de l'unité de mémoire (24) à la commande (13) de téléphérique.

10. Téléphérique selon l'une des revendications 6 à 9, **caractérisé en ce que** le rail conducteur (10) est prévu pour l'alimentation électrique du véhicule (4) lorsque le consommateur de courant (11) du véhicule (4) est en contact avec le rail conducteur (10).
